# EUROPEAN PATENT SPECIFICATION

(11) **EP 2 610 171 B1**
(45) Date of publication and mention of the grant of the patent: **10.09.2014**
(21) Application number: 11400065.6
(22) Date of filing: 29.12.2011
(51) Int. Cl.: B64C 25/56

(54) **An aircraft with an automatic system for water detection**
Flugzeug mit automatischem System zur Wasserdetektion
Aéronef avec un système automatique pour la détection de l'eau

(43) Date of publication of application: 03.07.2013
(73) Proprietor: AIRBUS HELICOPTERS DEUTSCHLAND GmbH, 86609 Donauwörth (DE)
(72) Inventor: Rappl, Johann, 86655 Harburg (DE); Fischer, Juergen, 86157 Augsburg (DE); Osenstaetter, Paul, 83646 Bad Tölz (DE)
(74) Representative: Schmid, Rudolf

(56) References cited:
- WO-A1-2009/054844
- US-A1- 2007 199 499
- US-A1- 2011 276 232

## Description

The invention is related to a water detection system included in an external life raft system for aircrafts, particularly to a helicopter with an external life raft system, with the features of claim 1.

Certain types of aircrafts, such as, for example, helicopters, are required by regulatory agencies to carry inflatable floatation devices for passenger safety in the event of an emergency while flying over water. Aircrafts with emergency float systems are available with external mounted life rafts.

Said emergency float systems are having problems with regard to:
1. Unintendent release of the life raft in flight
2. Non-activation of successive actions (e.g. release of life rafts) caused by disturbed or damaged components (sensors, power supply, etc.) which are not part of the system.
3. Non-activation of successive actions (e.g. release of life rafts) caused by unconsciousness of the crew.
4. Non-detection of water with extremely low salinity (fresh water)
5. Non-detection of water respectively non-activation of successive actions (e.g. release of life rafts) caused by mechanical sensors which are damaged, impacted, non-functioning due to environmental conditions and/ or water impact.

The document US 7309267 B1 discloses an emergency floatation system associated with a landing gear of a rotorcraft comprising at least a float unit and a raft module. The float unit is formed by a base and a float cover with an inflatable float being positioned there between. The raft module is formed with a raft compartment adapted to receive an inflatable raft in the packed condition thereof. The raft module is supported on the float by the base. The raft is adapted for inflation and deployment from the raft module independently of the float deployment.

The document US 2007199499 A1 discloses an emergency floatation system for an aircraft including an actuator box assembly that activates the floatation system either electrically or manually. The actuator box assembly is separated from a valve assembly of an inflation reservoir and provides an interface between an electromechanical trigger system and a redundant mechanical trigger system. The actuator box includes a pivot member that provides an interface for the redundant trigger systems and an output actuator. For normal operation a button in the cockpit is pressed which sends an electrical signal to an electromechanical actuator in the actuator box assembly. The electromechanical actuator rotates the pivot member, which operates the output actuator and opens the valve assembly. Alternatively, should the electrical system of the aircraft fail, the pilot or other occupant may activate the mechanical trigger system, thereby rotating the pivot member and activating the output actuator to open the valve assembly.

The document US 2006016380 A1 discloses an inflatable flotation device mounted to a craft. The device comprises an electronic deployment system for activating inflation of the flotation device. A method for inflating a flotation device mounted to a craft is also provided. The method comprises electrically activating the flotation device with a control system and further includes a two level switching mechanism providing a first alert level and a second alert level prior to deployment of the flotation device. Another similar device is disclosed in document US20110276232.

It is an object of the present invention to provide an aircraft with an improved system for water detection in an external life raft system.

The solution is provided with an aircraft with a system with the features of claim 1. Preferred embodiments of the invention are presented with the subclaims.

According to the invention an aircraft with an external life raft system outside a cabin comprises a life raft container along either side of a longitudinal aircraft axis. Said containers comprise each for determination whether "aircraft in flight" or "aircraft in water" at least one water sensor, at least one vibration sensor, a life raft control panel and an autonomous power supply system in said life raft control logic panel or within a separate unit. Said autonomous power supply system supplies all components of the external life raft system with electric power and comprises electrical activation means for electrical supported manual or electrical automatic activation of the life rafts. The external life raft system of the inventive aircraft's activation is electrical and provides for automated activation of the life raft system by means of a logic circuit after a suitable analysis of data provided by the sensors. An advantage of the external life raft system of the inventive aircraft is the autonomous power supply system with a power supply system that is independent from the power resources in order to guarantee safety of the aircraft/helicopter and reliability of the external life raft system. The external life raft system of the inventive aircraft contains all required components. No external power supply and no external control or sensor signal are required. The choice, number and positioning of the sensors of the external life raft system of the inventive aircraft provide an extremely safe determination of the state "aircraft in flight" and "aircraft in water". The external life raft system of the inventive system has self-test function.

According to a preferred embodiment of the invention each external life raft system comprises two water sensors per life raft container and four vibration sensors in the life raft control logic. Data from the two water sensors per life raft container are acquired by the control logic for automatic actuation of the life raft and to directly control an activation device. If two water sensors per life raft container detect water, one condition for automatic activation of the external life raft system is given for the control logic. From the four vibration sensors, preferably two are surveying the transversal axis (Y) and two are surveying the vertical axis (Z) of the aircraft for implementation of the external life raft system and to directly inhibit the activation device. The inventive external life raft system works with one water sensor on each side of the aircraft, however, as the safety of the aircraft is very important and must be guaranteed, at least two water sensors per aircraft side should be used.

According to a further preferred embodiment of the invention preferably three attitude sensors are located in the life raft control panel or the separate unit. The three attitude sensors allow the control logic to perform triple voting. Data from the three attitude sensors are acquired by the control logic for automatic actuation of the life raft and to directly control an activation device.

According to a further preferred embodiment of the invention the two water sensors per aircraft side are connected in series for positive activation and preferably one water sensor is located at a forward area of each life raft container and one water sensor is located at an aft area of each life raft container.

According to a further preferred embodiment of the invention the water sensors are impedance sensors preferably composed of a box equipped with two rhodium plated electrodes to allow the detection of salt water, even with an extremely low salinity, by measuring the electrical conductivity.

The invention and its advantages are more evident by referring to the preferred embodiments as presented in the following description with reference to the attached drawings.
Fig. 1 shows a perspective view of a helicopter with an external life raft system according to the invention,
Fig. 2 shows a schematic representation of a circuit of sensors of an external life raft system according to the invention,
Fig. 3 shows a perspective view of a life raft container of the invention,
Fig. 4 shows a cross sectional view through a life raft container of the invention, and
Fig. 5, 6 show working ranges of vibration sensors for the main rotor frequency in transversal y-axis of the invention.

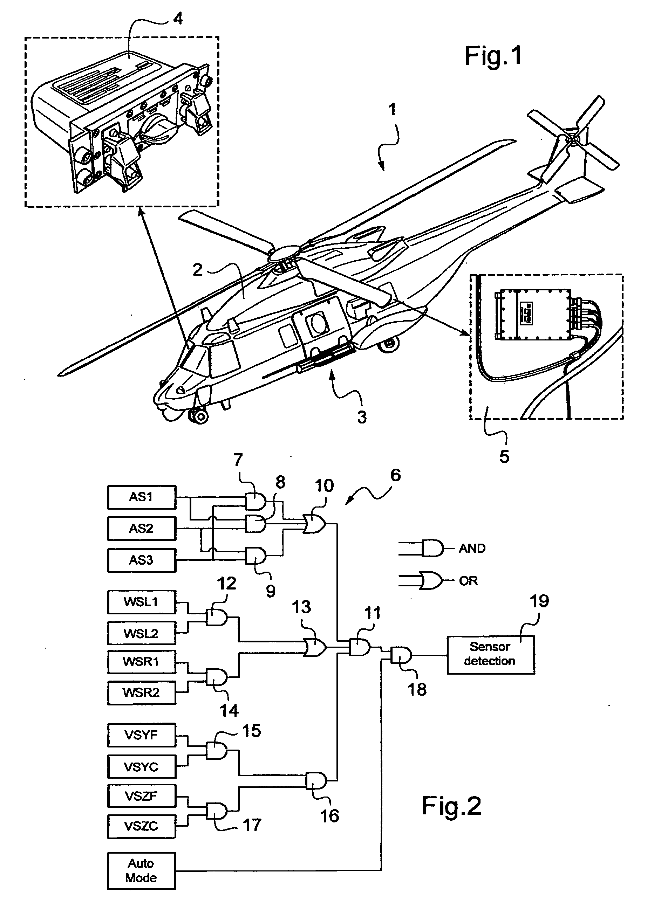

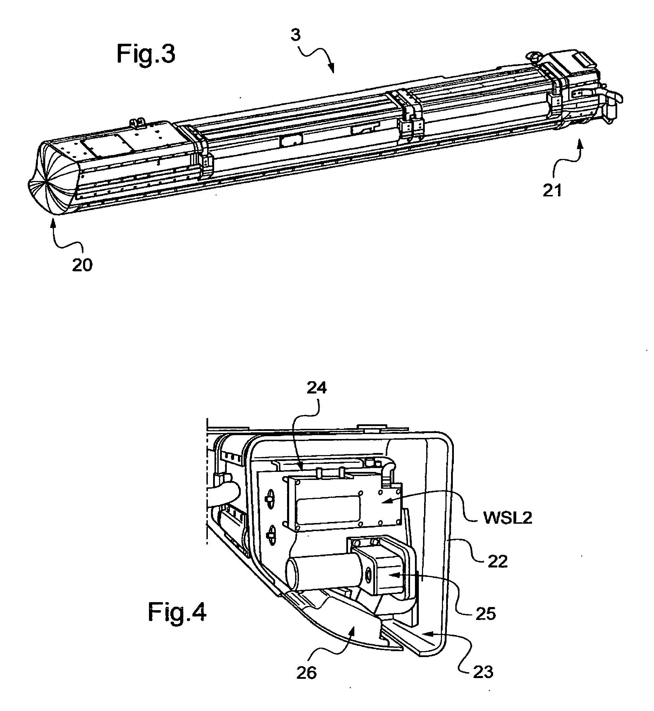

According to Fig. 1 a helicopter 1 as an aircraft is provided with a cabin 2 and an external life raft system. The external life raft system comprises the following subsystems:
- two life raft containers 3, one externally fixed on the left hand side and one externally fixed on the right hand side of the helicopter 1, each containing a 12 men life raft (not shown) with overload capacity of 18 men. Each life raft container 3 has a handle 26 (see Fig. 4) fixed on the outside for mechanical release of the life raft and is equipped with a manually extendable/ retractable boarding aid,
- one life raft control panel 4, positioned inside the cabin 2 between a pilot seat (not shown) and a co-pilot seat (not shown) of the helicopter 1, and
- one life raft control logic 5, mounted inside the cabin 2.

The life raft control panel 4 is provided with a rotary switch (not shown) and the armed automatic mode for electrical activation of the external life raft system has to be selected by means of said switch.

To trigger an electrical activation of the life raft, in manual or automatic operation, the electrical activation itself is supplied autonomously by actuation batteries (not shown) located in the life raft control logic 5.

Helicopter power is provided by two redundant 28V DC supplies (not shown) which operate the illumination, monitoring and diagnosis of the whole external life raft system when the external life raft system is switched to armed mode. An emergency power supply from avionic batteries (not shown) located internally in the life raft control logic 5 operates autonomously illumination, monitoring and diagnosis of the whole external life raft system in case of helicopter's power loss and if the system is switched to armed mode. The external life raft system switches off illumination after two hours in case of helicopter power loss in "ARMED" mode in order to save capacity of the emergency power supply.

According to Fig. 2 corresponding features are referred to with the references of Fig. 1. Three attitude sensors AS1, AS2, AS3 are provided for a logic circuit 6 of the helicopter 1. The signals of two of these three attitude sensors AS1, AS2, AS3 are combined at three logical "And" elements 7, 8, 9 and only if signals from at least two of these three attitude sensors AS1, AS2, AS3 are available an attitude signal is communicated from said three logical "And" elements 7, 8, 9 to an associated logical "Or" element 10. Any of the attitude signals from either the two attitude sensors AS1, AS2 or the two attitude sensors AS2, AS3 or the two attitude sensors AS1, AS3 pass the associated logical "Or" element 10 towards a further logical "And" element 11. The three attitude sensors AS1, AS2, AS3 are arranged for determination whether the aircraft is in capsized condition. For this purpose the three attitude sensors AS1, AS2, AS3 are located in the life raft control logic 5 for the specific determination of 135° roll angles. The attitude sensor type is a MEMS programmable 360° inclinometer providing output signals corresponding to the inclination angle of the reference axis. This information can be acquired by the life raft control logic 5 and processed to detect the capsized condition of the helicopter 1. If the helicopter 1 is found to be capsized the life raft control logic 5 inhibits inflation of the life rafts of the helicopter 1.

Two water sensor units WSL1, WSL2 of the logic circuit 6 are provided in the left hand life raft container 3 and two water sensor units WSR1, WSR2 of the logic circuit 6 are provided in the right hand life raft container 3. The signals of the two water sensor units WSL1, WSL2 in the left hand life raft container 3 are combined at a logical "And" element 12 and only if the signals from both of the two water sensor units WSL1, WSL2 indicate water presence a water presence signal is communicated to an associated logical "Or" element 13. Correspondingly the signals of the two water sensor units WSR1, WSR2 in the right hand life raft container 3 are combined at a logical "And" element 14 and only if the signals from both of the two water sensor units WSR1, WSR2 indicate water presence a water presence signal is communicated to the associated further logical "Or" element 13. Said combination of the water sensor units WSR1, WSR2 in the right hand life raft container 3 or said combination of the two water sensors WSL1, WSL2 in the left hand life raft container 3 corresponds to a connection in series of the respective pairs of water sensor units WSR1, WSR2 in the right hand life raft container 3 or the water sensors WSL1, WSL2 in the left hand life raft container 3.

Any of the water presence signals from either the water sensor units WSR1, WSR2 in the right hand life raft container 3 or from the two water sensors WSL1, WSL2 in the left hand life raft container 3 pass the logical "Or" element 13 towards the further logical "And" element 11. If there is a water presence signal at the further logical "And" element 11 from either the right hand or the left hand life raft container 3 the helicopter 1 is considered to be in water.

Four vibration sensors VSYF, VSYC, VSZF, VSZC for the logic circuit 6 are arranged in the life raft control logic 5. The signals of the two vibration sensors VSYF, VSYC are combined at a logical "And" element 15 and only if the signals from both of the two vibration sensors VSYF, VSYC are present a signal is communicated to an associated logical "AND" element 16. Correspondingly the signals of the two vibration sensors VSZF, VSZC are combined at a logical "And" element 17 and only if the signals from both of the two vibration sensors VSZF, VSZC are present a signal is communicated to the associated logical "AND" element 16. Only if all the vibration sensors VSYF, VSYC, VSZF, VSZC each give signals a signal is communicated from the associated logical "AND" element 16 towards the further logical "And" element 11. When all of the four vibration sensors VSYF, VSYC, VSZF, VSZC simultaneously detect no vibration of the helicopter or no helicopter flight load factor above 1.7 g , respectively, life raft release is possible in automatic mode, depending on detection of water and capsize condition.

The further logical "And" element 16 passes a signal to a final logical "And" element 18 if the respective signals from the vibration sensors VSYF, VSYC, VSZF, VSZC and any of the water presence signals from either the water sensor units WSR1, WSR2 in the right hand life raft container 3 or from the two water sensors WSL1, WSL2 in the left hand life raft container 3 and signals of two of the three attitude sensors AS1, AS2, AS3 are present. The final logical "And" element 18 passes a signal to a sensor detection 19 if the automatic activation "Auto Mode" is switched on.

Consequently, if two of the three used attitude sensors AS1, AS2, AS3 detect the 135° roll angle and the vibration sensors VSYF, VSYC, VSZF, VSZC detect no vibration in the range of the rotor frequency an activation signal is provided to the life raft control logic 5 if simultaneously the water condition is fulfilled. The life raft control logic 5 verifies the received sensors signals. If the received sensors signals are confirmed the life raft control logic 5 triggers the actuation batteries to provide a firing signal to both life raft containers 3 respectively their actuation devices for 1.5 sec.

According to Fig. 3 corresponding features are referred to with the references of Fig. 1, 2. The water sensor units WSL1, WSL2, WSR1, WSR2 comprise impedance sensors respectively located at a forward area 20 and at an aft area 21 of each container 3.

According to Fig. 4 corresponding features are referred to with the references of Fig. 1 - 3. Each water sensor unit WSL1, WSL2, WSR1, WSR2 is composed of a box 22 with inlet holes 23 for water ingress and equipped with two rhodium plated electrodes 24. Based on the voltage applied to the circuitry and depending on the conductibility as a function of water salinity between the two electrodes 24 each of the water sensor units WSL1, WSL2, WSR1, WSR2 creates an output current. A signal conditioning is implemented, due to the fact that only low currents can flow between the electrodes in case of low conductivity water. The minimum conductibility of any of the water sensor units WSL1, WSL2, WSR1, WSR2 is 10 µS/cm. A lower raft release handle 26 of the box 22 and an electrical activation motor gearbox 25 as electrical activation means are provided inside the life raft container 3.

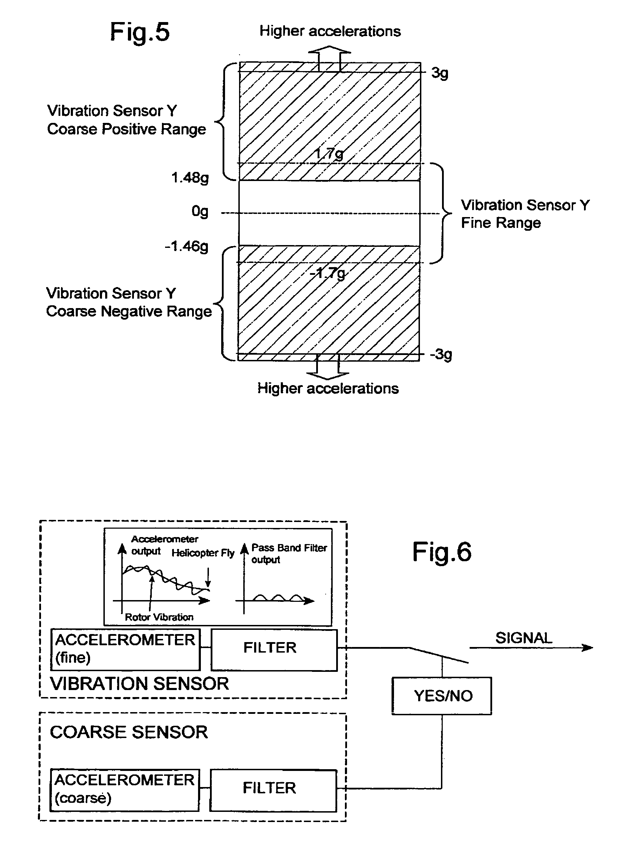

According to Fig. 5, 6 corresponding features are referred to with the references of Fig. 1 - 4. The vibration sensors VSYF, VSYC, VSZF, VSZC are suitable to detect flying conditions of helicopter 1 through the main rotor vibration frequencies. The vibration sensors VSYF, VSYC, VSZF, VSZC comprise accelerometers measuring the oscillation spectrum of the helicopter's 1 adjacent structures. Since the vibration levels are generally low along the longitudinal x-axis of the helicopter 1 said vibration levels are not used for evaluation; only the transversal y-and the vertical z- axis are evaluated by two vibration sensors VSYF, VSYC or two vibration sensors VSZF, VSZC connected in series respectively for each of the transversal y- and the vertical z-axis direction.

A first one of these two vibration sensors VSYF, VSYC or VSZF, VSZC in combination with filters is a so-called "fine vibration sensor". Said fine vibration sensor is able to detect the main rotor frequency in the oscillation spectrum of the adjacent structure and consequently provides rotor turning status information with a load factor range up to |1.7 g|. Since the vibration values in the range of the main rotor frequency are generally |0.5 g| or less the sensitivity of this fine vibration sensor is high enough to reliably detect these comparatively small values.

The second one of these two vibration sensors VSYF, VSYC or VSZF, VSZC in combination with filters is a so-called "coarse vibration sensor". Said coarse vibration sensor is detecting any changing flight load factors resulting from flight manoeuvres over |1.5 g| up to |3 g|. If the load factor is above the mentioned limit of |3 g| the coarse vibration sensor still provides the steady output of |3 g|.

The combination of the fine vibration sensor and the coarse vibration sensor covers the full flight envelope.

The fine vibration sensor detects the main rotor frequency in the range up to |1.7 g|. The output signal provided by the fine vibration sensor is filtered accordingly in order to detect the main rotor frequency in the oscillation spectrum of the adjacent structure and consequently to provide rotor turning status information.

While performing flight manoeuvres, the helicopter 1 experiences changing load factors in all directions over time. When the helicopter 1 is experiencing more than |1.7 g|, the fine vibration sensor is reaching its limit of sensing range and goes into saturation. In this situation the fine vibration sensor fails to detect main rotor rotation since it will provide a steady output of |1.7 g| with no oscillation in the range of the main rotor frequency recognizable.

For the flight manoeuvres of the helicopter 1 the coarse vibration sensor is implemented. The coarse vibration sensor enhances the capability of the external life raft system to detect whether the helicopter 1 is in a dynamic flight condition. The coarse vibration sensor covers the load factors over |1.5 g| up to |3 g| and disengages the signal providing rotor turning status information from the fine vibration sensor. If the load factor is above the mentioned limit of |3 g| the coarse vibration sensor still provides the steady output of |3 g| and therefore blocks the fine vibration sensor signal.

All the vibration sensors VSYF, VSYC or VSZF, VSZC are setup in the following way:
- For both y- and z-axis separately the fine vibration-sensor and the coarse vibration sensor are linked in series in order to detect either main rotor frequency or helicopter flight load factor with accelerations above |1.5 g| in y- or z-direction.
- If the four vibration sensors VSYF, VSYC, VSZF, VSZC simultaneously detect no vibration of the helicopter 1 or no helicopter flight load factor above |1.5 g|, respectively, life raft release is possible in automatic mode, depending on detection of water and capsize condition.

Thus the external life raft system of the helicopter 1 is automatically activated if the automatic activation mode is switched on and if the following conditions are given all together simultaneously:
At least two water sensor units WSR1, WSR2 or WSL1, WSL2 of one life raft container 3 detect water at the same time,
Not more than one attitude sensor AS1, AS2, AS3 indicates a capsized position of the helicopter 1 and
None of the four vibration sensors VSYF, VSYC, VSZF, VSZC simultaneously detect any vibration of the helicopter 1.

### List of references

- AS: Attitude Sensor
- DC: Direct Current
- WS: Water Sensor
- VS: Vibration Sensor
- g: gravity factor
- 1: helicopter
- 2: cabin
- 3: life raft container
- 4: life raft control panel
- 5: one life raft control logic
- 6: logic circuit
- 7-9: logical "And" elements
- 10: logical "Or" element
- 11: further logical "And" element
- 12: logical "And" element
- 13: associated logical "Or" element
- 14: logical "And" element
- 15: logical "And" element
- 16: associated logical "AND" element
- 17: logical "And" element
- 18: final logical "And" element
- 19: sensor detection
- 20: forward area
- 21: aft area
- 22: box
- 23: inlet holes
- 24: rhodium plated electrodes
- 25: electrical activation motor gearbox
- 26: lower raft release handle

## Claims

1. An aircraft (1) with an automatic system for water detection system outside a cabin (2), comprising a life raft control panel (4) and/ or unit, a life raft container (3) on either side of a longitudinal aircraft x-axis, said containers (3) comprising at least one water sensor (WSR1, WSR2 WSL1, WSL2) in an extra compartment each for determination whether "aircraft in flight" or "aircraft in water", said containers (3) comprising:
- an autonomous power supply system supplying all sensors and/or components of system and comprising electrical activation means (26) for manual or automatic activation of the life raft,
**characterized in that** the raft life containers (3) are provided with at least one vibration sensor (VSYF, VSYC, VSZF, VSZC).

2. The aircraft (1) according to claim 1,
**characterized in that** each external life raft system comprises two water sensors (WSR1, WSR2 or WSL1, WSL2) and four vibration sensors (VSYF, VSYC, VSZF, VSZC) in the life raft control logic (5).

3. The aircraft (1) according to claim 1,
**characterized in that** attitude sensors are located in the life raft control panel/ unit (4).

4. The aircraft (1) according to claim 2,
**characterized in that** the two water sensors (WSR1, WSR2 or WSL1, WSL2) per life raft container (3) are connected in series.

5. The aircraft (1) according to claim 2,
**characterized in that** one water sensor is located at a forward area (20) of each life raft container (3) and one water sensor is located at an aft area (21) of each life raft container (3).

6. The aircraft (1) according to claim 2,
**characterized in that** two of the four vibration sensors (VSYF, VSYC, VSZF, VSZC) are for the transversal y-axis and two of the four vibration sensors (VSYF, VSYC, VSZF, VSZC) are for the vertical z-axis.

7. The aircraft (1) according to claim 1,
**characterized in that** the water sensors (WSR1, WSR2, WSL1, WSL2) are impedance sensors preferably composed of a box (22) equipped with two rhodium plated electrodes (24).

## Patentansprüche

1. Flugzeug (1) mit einem automatischen System zur Wasserdetektion außerhalb einer Kabine (2), mit einem Rettungsbootbedienpult (4) und/oder einer Bedienungseinheit, einem Rettungsbootbehälter (3) auf beiden Seiten einer Flugzeuglängs-X-Achse, wobei die Behälter (3) mindestens einen Wassersensor (WSR1, WSR2, WSL1, WSL2) in einem Sonderabteil aufweisen, wovon jeder dazu dient zu bestimmen, ob das Flugzeug sich in der Luft befindet oder ob das Flugzeug sich im Wasser befindet, wobei die Behälter (3) aufweisen:
- ein autonomes Stromversorgungssystem, welches alle Sensoren und/oder Komponenten des System mit Strom versorgt, und elektrische Betätigungsmittel (26) zur manuellen oder automatischen Betätigung des Rettungsbootes aufweist,
**dadurch gekennzeichnet, dass**
die Rettungsbootbehälter (3) mit mindestens einem Vibrationssensor (VSYF, VSYC, VSZF, VSZC) ausgerüstet sind.

2. Flugzeug (1) nach Anspruch 1,
**dadurch gekennzeichnet, dass**
jedes externe Rettungsbootsystem zwei Wassersensoren (WSR1, WSR2 oder WSL1, WSL2) und vier Vibrationssensoren (VSYF, VSYC, VSZF, VSZC) in der Rettungsbootsteuerelektronik (5) aufweist.

3. Flugzeug (1) nach Anspruch 1,
**dadurch gekennzeichnet, dass** Höhensensoren in dem Rettungsbootbedienpult/der Rettungsbootbedienungseinheit (4) angeordnet sind.

4. Flugzeug (1) nach Anspruch 2,
**dadurch gekennzeichnet, dass**
die zwei Wassersensoren (WSR1, WSR2 oder WSL1, WSL2) pro Rettungsbootbehälter (3) in Reihe geschaltet sind.

5. Flugzeug (1) nach Anspruch 2,
**dadurch gekennzeichnet, dass** ein Wassersensor im vorderen Bereich (20) eines jeden Rettungsbootbehälters (3) und ein Wassersensor in einem hinteren Bereich (21) eines jeden Rettungsbootbehälters (3) angeordnet ist.

6. Flugzeug (1) nach Anspruch 2,
**dadurch gekennzeichnet, dass** zwei der vier Vibrationssensoren (VSYF, VSYC, VSZF, VSZC) für die Quer-Y-Achse und zwei der vier Vibrationssensoren (VSYF, VSYC, VSZF, VSZC) für die vertikale Z-Achse bestimmt sind.

7. Flugzeug (1) nach Anspruch 1,
**dadurch gekennzeichnet, dass**
die Wassersensoren (WSR1, WSR2, WSL1, WSL2) Impedanzsensoren sind, die vorzugsweise einen Kasten (22) aufweisen, der mit zwei rhodiumbeschichteten Elektroden (24) ausgerüstet ist.

## Revendications

1. Aéronef (1) avec un système automatique pour un système de détection d'eau à l'extérieur d'une cabine (2), comprenant un panneau et/ou une unité de commande de radeau de sauvetage (4), un conteneur pour radeau de sauvetage (3) de chaque côté d'un axe longitudinal d'aéronef x, lesdits conteneurs (3) comprenant au moins un capteur d'eau (WSR1, WSR2, WSL1, WSL2) dans un compartiment supplémentaire, chacun pour détermination de l'état « aéronef en vol » ou « aéronef dans l'eau », lesdits conteneurs (3) comprenant :
- un système d'alimentation autonome alimentant tous les capteurs et/ou composants du système et comprenant un moyen d'activation électrique (26) pour activation manuelle ou automatique du radeau de sauvetage,
**caractérisé en ce que** les conteneurs pour radeau de sauvetage (3) sont pourvus d'au moins un capteur de vibrations (VSYF, VSYC, VSZF, VSZC).

2. Aéronef (1) selon la revendication 1,
**caractérisé en ce que** chaque système de radeau de sauvetage externe comprend deux capteurs d'eau (WSR1, WSR2 ou WSL1, WSL2) et quatre capteurs de vibrations (VSYF, VSYC, VSZF, VSZC) dans la logique de commande de radeau de sauvetage (5).

3. Aéronef (1) selon la revendication 1,
**caractérisé en ce que** des capteurs d'orientation sont situés dans le panneau/l'unité de commande de radeau de sauvetage (4).

4. Aéronef (1) selon la revendication 2,
**caractérisé en ce que** les deux capteurs d'eau (WSR1, WSR2 ou WSL1, WSL2) par conteneur pour radeau de sauvetage (3) sont reliés en série.

5. Aéronef (1) selon la revendication 2,
**caractérisé en ce qu'**un capteur d'eau est situé dans une zone avant (20) de chaque conteneur pour radeau de sauvetage (3) et un capteur d'eau est situé dans une zone arrière (21) de chaque conteneur pour radeau de sauvetage (3).

6. Aéronef (1) selon la revendication 2,
**caractérisé en ce que** deux des quatre capteurs de vibrations (VSYF, VSYC, VSZF, VSZC) sont destinés à l'axe transversal y et deux des quatre capteurs de vibrations (VSYF, VSYC, VSZF, VSZC) sont destinés à l'axe vertical z.

7. Aéronef (1) selon la revendication 1,
**caractérisé en ce que** les capteurs d'eau (WSR1, WSR2, WSL1, WSL2) sont des capteurs d'impédance de préférence composés d'une boîte (22) équipée de deux électrodes rhodiées (24).
